# EUROPÄISCHE PATENTSCHRIFT

(11) **EP 0 985 712 B1**
(45) Veröffentlichungstag und Bekanntmachung des Hinweises auf die Patenterteilung: **29.05.2002**
(21) Anmeldenummer: 99117093.7
(22) Anmeldetag: 31.08.1999
(51) Int. Cl.: C09B 67/22, C09B 67/04, C09C 1/00

(54) **Pigmentzubereitungen in Granulatform**
Pigment preparations in granulated form
Préparations pigmentaires sous forme de granulé

(30) Priorität: 10.09.1998 DE 19841377
(43) Veröffentlichungstag der Anmeldung: 15.03.2000
(73) Patentinhaber: BASF AKTIENGESELLSCHAFT, 67056 Ludwigshafen (DE)
(72) Erfinder: Reisacher, Hansulrich, Dr., 67133 Maxdorf (DE); Dotter, Anton, 68766 Hockenheim (DE); Berger, Gerhard, Dr., 70469 Stuttgart (DE); Pelz, Otmar, 74354 Besigheim (DE); Seeger, Oliver, Dr., 68163 Mannheim (DE)

(56) Entgegenhaltungen:
- EP-A- 0 212 361
- EP-A- 0 816 440
- DE-A- 4 240 511
- DATABASE WPI Week 9227 Derwent Publications Ltd., London, GB; AN 1992-203858[27] XP002120589 T. TOMOYUKI ET. AL.: "Non-toxic pigment composition for traffic signposts" & JP 04 132770 A (DAINIPPON INK & CHEM. KK), 7. Mai 1992 (1992-05-07)
- DATABASE WPI Week 8325 Derwent Publications Ltd., London, GB; AN 1983-60063k[25] XP002120590 Y. KUBO: "Organic-Inorganic composite pigments prodn." & JP 58 080352 A (Y. KUBO), 14. Mai 1983 (1983-05-14)
- DATABASE WPI Week 8147 Derwent Publications Ltd., London, GB; AN 1981-85912d[47] XP002120591 N. MASATAKA ET. AL.: "Processed yellow organic pigment mfr." & JP 56 127668 A (DAIICHI KASEI KOGYO KK), 6. Oktober 1981 (1981-10-06)

## Beschreibung

Die vorliegende Erfindung betrifft neue Pigmentzubereitungen in Granulatform mit einer mittleren Granulatteilchengröße von 5 bis 3000 µm, enthaltend als wesentliche Bestandteile
50 bis 99,5 Gew.-% mindestens eines anorganischen Pigments und
0,5 bis 50 Gew.-% mindestens eines organischen Pigments.

Weiterhin betrifft die Erfindung die Herstellung dieser Pigmentzubereitungen sowie ihre Verwendung zum Einfärben von polymeren Materialien.

Wie aus der EP-A-816 440 bekannt, sind durch Kombination von Bismutvanadat mit organischen Pigmenten Pigmente mit hohen Farbtonreinheiten (Chroma-Werten) zu erhalten. Beschrieben werden pulverförmige Mischungen dieser Pigmente, die durch trockenes Vermahlen der formierten Pigmente hergestellt werden.

Pulverförmige Pigmentzubereitungen haben jedoch den Nachteil, daß sie bei der Handhabung zu starker Staubbelästigung führen und ihre Rieselfähigkeit bei Containerbelieferungen auch zu wünschen übrig läßt.

Der Erfindung lag daher die Aufgabe zugrunde, diesen Mängeln abzuhelfen, und Pigmentzubereitungen mit vorteilhaften Anwendungseigenschaften bereitzustellen.

Demgemäß wurden Pigmentzubereitungen in Granulatform mit einer mittleren Granulatteilchengröße von 5 bis 3000 µm gefunden, welche als wesentliche Bestandteile
50 bis 99,5 Gew.-% mindestens eines anorganischen Pigments und
0,5 bis 50 Gew.-% mindestens eines organischen Pigments
enthalten.

Außerdem wurde ein Verfahren zur Herstellung dieser Pigmentzubereitungen gefunden, welches dadurch gekennzeichnet ist, daß man die bei der Pigmentsynthese anfallenden Rohpigmente gemeinsam naßvermahlt und die bei der Mahlung erhaltene Pigmentsuspension anschließend unter Durchmischung trocknet.

Weiterhin wurde die Verwendung der Pigmentzubereitungen zum Einfärben von polymeren Systemen gefunden.

Die erfindungsgemäßen Pigmentzubereitungen enthalten als anorganisches Pigment vorzugsweise ein Bismutvanadatpigment, ein Bleichromatpigment, ein Cersulfidpigment, ein Rutilpigment oder ein Spinellpigment oder ein Gemisch dieser Pigmente, wobei selbstverständlich auch Gemische von Pigmenten derselben Klasse vorliegen können.

Besonders bevorzugte anorganische Pigmente sind dabei Bismutvanadatpigmente und Rutilpigmente.

Für die erfindungsgemäßen Pigmentzubereitungen bevorzugte organische Pigmente sind Anthrachinonpigmente, Anthrapyrimidinpigmente, Azopigmente, Azomethinpigmente, Chinacridonpigmente, Chinophthalonpigmente, Diketopyrrolopyrrolpigmente, Indanthronpigmente, Isoindolinpigmente, Isoindolinonpigmente, Metallkomplexpigmente, Perinonpigmente, Perylenpigmente, Phthalocyaninpigmente, Pyranthronpigmente, Pyrazolochinazolonpigmente und Thioindigopigmente sowie auch Mischungen dieser Pigmente.

Besonders bevorzugte organische Pigmente sind dabei Isoindolinpigmente und Chinophthalonpigmente.

Die erfindungsgemäßen Pigmentzubereitungen sind von besonderem Interesse für den gelben, orangefarbenen, roten und grünen Farbtonbereich, so daß sie in der Regel Gemische mehrerer Gelbpigmente oder Gemische von Gelbpigmenten mit Orangepigmenten, Rotpigmenten, Braunpigmenten und/oder Blaupigmenten enthalten.

Vorzugsweise enthalten die erfindungsgemäßen Pigmentzubereitungen zwei oder drei verschiedene Pigmente. Selbstverständlich können auch mehr Pigmente enthalten sein.

Als Beispiele für besonders geeignete Pigmente seien im einzelnen genannt:
- Bismutvanadatpigmente:: C.I. Pigment Yellow 184;
- Bleichromatpigmente:: C.I. Pigment Yellow 34; C.I. Pigment Red 104;
- Cersulfidpigmente:: C.I. Pigment Orange 75; C.I. Pigment Red 265;
- Rutilpigmente:: C.I. Pigment Yellow 53, 157, 158, 159, 160, 161, 162, 163, 164 und 189; C.I. Pigment Brown 24 und 33;
- Spinellpigmente:: C.I. Pigment Yellow 119; C.I. Pigment Brown 33, 34, 35, 37, 39 und 40; C.I. Pigment Blue 28, 36 und 72;
- Anthrachinonpigmente:: C.I. Pigment Yellow 147 und 199;
- Anthrapyrimidinpigmente:: C.I. Pigment Yellow 108;
- Azopigmente:: C.I. Pigment Yellow 3, 13, 62, 74, 151, 168 und 191:1; C.I. Pigment Orange 5, 13, 34, 36, 64 und 67; C.I.. Pigment Red 1, 2, 3, 4, 5, 23, 48:1, 48:2, 48:3, 48:4, 49, 49:1, 51:1, 52:1,53, 53:1, 57:1, 58:2, 58:4, 112, 144, 146, 148, 166, 170, 184, 214, 220, 221 und 251;
- Azomethinpigmente:: C.I. Pigment Yellow 129;
- Chinacridonpigmente:: C.I. Pigment Orange 48 und 49; C.I. Pigment Red 42, 122, 202 und 206;
- Chinophthalonpigmente:: C.I. Pigment Yellow 138;
- Diketopyrrolopyrrolpigmente:: C.I. Pigment Orange 71 und 73; C.I. Pigment Red 254, 255, 264, 270 und 272;
- Indanthronpigmente:: C.I. Pigment Blue 60 und 64;
- Isoindolinpigmente:: C.I. Pigment Yellow 139 und 185; C.I. Pigment Orange 61 und 69, C.I. Pigment Red 260;
- Isoindolinonpigmente:: C.I. Pigment Yellow 109, 110 und 173;
- Metallkomplexpigmente:: C.I. Pigment Yellow 117, 153 und 177;
- Perinonpigmente:: C.I. Pigment Orange 43; C.I. Pigment Red 194;
- Perylenpigmente:: C.I. Pigment Red 123, 149, 178, 179, 190 und 224;
- Phthalocyaninpigmente:: C.I. Pigment Blue 15, 15:1, 15:2, 15:3, 15:4, 15:6 und 16;
- Pyranthronpigmente:: C.I. Pigment Orange 51; C.I. Pigment Red 216;
- Pyrazolochinazolonpigmente:: C.I. Pigment Orange 67; C.I. Pigment Red 251;
- Thioindigopigmente:: C.I. Pigment Red 88.

Beispiele für besonders bevorzugte Pigmente sind C.I. Pigment Yellow 184 und 53 und C.I. Pigment Brown 24 sowie C.I. Pigment Yellow 138 und 139.

Die erfindungsgemäßen Pigmentzubereitungen liegen in Form eines Granulats vor, wobei die einzelnen Granulatteilchen in der Regel sowohl anorganisches als auch organisches Pigment enthalten. Im allgemeinen sind die Granulatteilchen überwiegend kugelförmig. Sie weisen mittlere Teilchengrößen von etwa 5 bis 3000 µm, vorzugsweise 10 bis 500 µm, auf. Üblicherweise hat die Granulatteilchengröße keinen Einfluß auf die koloristischen Eigenschaften bei der Applikation der erfindungsgemäßen Pigmentzubereitungen.

Die erfindungsgemäßen Pigmentzubereitungen können vorteilhaft mit Hilfe des erfindungsgemäßen Verfahrens hergestellt werden, indem man die bei der Pigmentsynthese anfallenden Rohpigmente gemeinsam naß vermahlt und die bei der Mahlung erhaltene Pigmentsuspension anschließend unter Durchmischung trocknet.

Im ersten Verfahrensschritt der gemeinsamen Naßmahlung werden die bei der Pigmentsynthese anfallenden Rohpigmente eingesetzt. Dabei kann es sich z.B. um feuchte Filterkuchen oder um nach einer abschließenden Calcinierung erhaltene Pigmentklinker handeln. Die Pigmente können gewünschtenfalls bereits mit z.B. stabilisierend wirkenden Beschichtungen belegt sein, ihre Teilchengröße und -form ist jedoch noch nicht eingestellt.

Die Mahlung wird vorzugsweise in wäßrigem Medium durchgeführt. Geeignete Medien sind jedoch auch organische Lösungsmittel, die protisch oder aprotisch sein können, sowie Mischungen dieser Lösungsmittel untereinander und/oder mit Wasser. Günstig ist die Verwendung der Flüssigkeit, mit der mindestens eines der Rohpigmente abschließend gewaschen wurde.

Beispiele für geeignete protische organische Lösungsmittel sind einwertige aliphatische Alkohole, insbesondere C₂-C₁₂-Alkohole, sowie mehrwertige Alkohole, insbesondere C₂-C₃-Alkylenglykole, und Etheralkohole, insbesondere C₂-C₃-Alkylenglykol-C₁-C₄-alkylether. Im einzelnen seien z.B. Ethanol, Propanol, Diethylenglykol und Ethylenglykolmonobutylether genannt.

Beispiele für geeignete aprotische organische Lösungsmittel sind cyclische Ether wie Tetrahydrofuran.

Üblicherweise werden bei der Mahlung 10 bis 60 gew.-%ige Suspensionen der Pigmente in den genannten Lösungsmitteln eingesetzt.

Selbstverständlich können auch für die eingesetzten Pigmente übliche Dispergierhilfsmittel (nichtionische, anionische oder kationische oberflächenaktive Mittel) anwesend sein, deren Gegenwart auch für die anschließende Granulierung günstig sein kann. Ihr Anteil beträgt jedoch üblicherweise nicht mehr als 2 Gew.-%, bezogen auf die Pigmente.

Die Mahlung kann vorteilhaft in einer Kugelmühle oder Rührwerkskugelmühle, die vorzugsweise mit 100 bis 2000 Upm betrieben wird, erfolgen. Geeignete Mahlkörper sind z.B. Glasperlen, Zirkonoxidperlen oder Sandkörner mit einem Durchmesser von etwa 0,4 bis 30 mm.

Üblicherweise wird so lange gemahlen, bis die mittlere Pigmentteilchengröße (d₅₀-Wert) bei etwa 0,4 bis 2 µm, vorzugsweise bei 0,8 bis 1,5 µm liegt.

Nach Abtrennen der Mahlkörper wird die erhaltene Pigmentsuspension dem erfindungsgemäßen Trocknungsschritt unter Durchmischung unterzogen.

Für den großtechnischen Maßstab geeignete Apparate sind daher z.B. Taumeltrockner, Schaufeltrockner und zwangsgereinigte Kontakttrockner, in denen die Trocknung vorzugsweise unter vermindertem Druck (etwa 50 bis 500 mbar) vorgenommen wird. Gegebenenfalls kann eine zusätzliche Grobzerkleinerung im oder außerhalb des Trocknungsapparats vorgenommen werden.

Vorteilhaft kann der Trocknungsschritt auch in einer Sprühtrocknungsanlage, bei der die zu versprühende Suspension in der Vorlage zur Durchmischung gerührt wird, durchgeführt werden. Als geeignete Aggregate seien z.B. Sprühturm und Sprühwirbelbett, bei dem das Wasser unter Begasung mit heißem Gas, z.B. Luft oder Stickstoff, verdampft wird, genannt. Das Granulat kann dann direkt in der gewünschten Teilchengröße erhalten werden.

Die erfindungsgemäßen Pigmentzubereitungen eignen sich hervorragend zum Einfärben von polymeren Materialien wie Lacken, Druckfarben und Kunststoffen. Hierbei zeichnen sie sich insbesondere durch hohe (gegenüber den Pigmentpulvermischungen aus der EP-A-816 440 deutlich erhöhte) Farbstärken aus, was nicht zu erwarten war.

### Beispiele

### Herstellung und Anwendung von erfindungsgemäßen Pigmentzubereitungen

Zunächst wurden die Rohpigmente analog zu folgenden Literaturvorschriften hergestellt:
C.I. Pigment Yellow 184: analog Beispiel 10 der EP-A-551 637;
C.I. Pigment Yellow 53: analog Beispiel 1 der DE-A-30 19 172, jedoch keine Naßmahlung;
C.I. Pigment Brown 24: analog Beispiel 1 der EP-A-233 601, jedoch keine Naßmahlung;
C.I. Pigment Yellow 138: analog Beispiel 1 der DE-A-17 70 960;
C.I. Pigment Yellow 139: analog Beispiel 1 der DE-A-26 28 409.

Die Naßmahlung der Rohpigmente wurde wie folgt vorgenommen:

### a) Bismutvanadatpigment enthaltende Pigmentzubereitungen:

Ein Gemisch aus 20 g der in der Tabelle genannten Rohpigmentmischung und 30 g Wasser wurde mit 90 g Glasperlen (1 mm Durchmesser) auf einem Skandexgerät mit 100 ml Volumen 20 min gemahlen.

### b) Rutilpigment enthaltende Pigmentzubereitungen:

Ein Gemisch aus 30 g der in der Tabelle genannten Rohpigmentmischung und 60 g Wasser wurde mit 250 g Glasperlen (2 mm Durchmesser) in einer Fliehkraftkugelmühle mit 300 ml Mahlvolumen 30 min gemahlen.

Nach Abtrennung der Glasperlen wurden die erhaltenen Pigmentsuspensionen wie folgt getrocknet:

Eine 10 gew.-%ige wäßrige Suspension der bei der Mahlung erhaltenen Pigmentzubereitung wurde auf einem Laborsprühtrockner Büchi 190 Mini Spray Dryer mit einem Durchsatz von 500 ml/h bei einer Eintrittstemperatur von 250°C und einer Austrittstemperatur von 110°C getrocknet.

Dabei wurden Pigmentzubereitungen in Granulatform mit einer mittleren Granulatteilchengröße von 40 µm erhalten.

Zur Beurteilung der koloristischen Eigenschaften der Pigmentzubereitungen wurden anschließend Lackierungen untersucht, die folgendermaßen hergestellt wurden: Eine Mischung aus 15 g der jeweiligen Pigmentzubereitung und 35 g Alkyd-Melamin-Einbrennlack (56 Gew.-% Feststoffanteil) wurde mit 70 g Glaskugeln (1 mm Durchmesser) 60 min mit einem Skandexgerät geschüttelt, dann auf Aluminium-Q-Panels deckend appliziert (Filmausziehgerät Typ 238 II, Fa. Erichsen) und 30 min bei 140°C eingebrannt.

Die Messung der CIELAB-Farbwerte erfolgte mit einem Zeiss-Spektralphotometer RF 16 unter Verwendung der Normlichtart D 65.

Die Bestimmung der Farbstärke (Angabe der Färbeäquivalente FAE) erfolgte über die Weißaufhellung des Lacks. Dazu wurden 36 g Alkyd-Melamin-Einbrennlack mit 7,5 g Titandioxid 2056 (Fa. Kronos) und 1,5 g der jeweiligen Pigmentzubereitung mit 70 g Glaskugeln (1 mm Durchmesser) 60 min mit einem Skandexgerät geschüttelt und dann wie oben beschrieben auf Aluminium-Q-Panels deckend appliziert und eingebrannt.

Den analogen Präparationen, bei denen die formierten Pigmente (d.h., die wie oben angegeben hergestellten und anschließend jeweils einer Mahlung auf eine mittlere Teilchengröße (d₅₀-Wert) von 0,8 µm (P.Y.184), 1,3 µm (P.Y.53), 1,1 µm (P.Br.24), 0,8 µm (P.Y.138) bzw. 0,8 µm (P.Y.139) unterworfenen Pigmente) ohne gemeinsame Mahlung eingesetzt wurden, wurde der FAE-Wert 100 (Standard) zugeordnet (Beispiele mit S gekennzeichnet). FAE-Werte < 100 bedeuten eine höhere Farbstärke als beim Standard, FAE-Werte > 100 entsprechend eine kleinere Farbstärke.

Auch für die Angabe der Chroma-Werte dC∗ wurden die Standardpräparationen als Basis angenommen.

Weitere Einzelheiten zu diesen Versuchen sowie deren Ergebnisse sind in der folgenden Tabelle aufgeführt. Bei den mit V gekennzeichneten Beispielen wurden analog zu Beispiel 1 der EP-A-816 440 durch gemeinsame Trockenmahlung der formierten Pigmente erhaltene Pigmentzubereitungen eingesetzt.

**Tabelle**

| Bsp. | x g | anorg. Pigment | y g | org. Pigment | dC* | FAE |
|---|---|---|---|---|---|---|
| 1 | 60 | P.Y. 184 | 40 | P.Y. 138 | 0,6 | 98 |
| V1 | 60 | P.Y. 184 | 40 | P.Y. 138 | 1,2 | 99 |
| S1 | 60 | P.Y. 184 | 40 | P.Y. 138 | 0 | 100 |
| 2 | 90 | P.Y. 184 | 10 | P.Y. 138 | 3,5 | 84 |
| V2 | 90 | P.Y. 184 | 10 | P.Y. 138 | 5,0 | 100 |
| S2 | 90 | P.Y. 184 | 10 | P.Y. 138 | 0 | 100 |
| 3 | 99 | P.Y. 184 | 1 | P.Y. 138 | 2,9 | 86 |
| V3 | 99 | P.Y. 184 | 1 | P.Y. 138 | 4,3 | 100 |
| S3 | 99 | P.Y. 184 | 1 | P.Y. 138 | 0 | 100 |
| 4 | 60 | P.Y. 184 | 40 | P.Y. 139 | 5,8 | 75 |
| V4 | 60 | P.Y. 184 | 40 | P.Y. 139 | 4,0 | 86 |
| S4 | 60 | P.Y. 184 | 40 | P.Y. 139 | 0 | 100 |
| 5 | 90 | P.Y. 184 | 10 | P.Y. 139 | 4,5 | 78 |
| V5 | 90 | P.Y. 184 | 10 | P.Y. 139 | 4,5 | 103 |
| S5 | 90 | P.Y. 184 | 10 | P.Y. 139 | 0 | 100 |
| 6 | 99 | P.Y. 184 | 1 | P.Y. 139 | 3,7 | 84 |
| V6 | 99 | P.Y. 184 | 1 | P.Y. 139 | 5,0 | 105 |
| S6 | 99 | P.Y. 184 | 1 | P.Y. 139 | 0 | 100 |
| 7 | 50 | P.Br. 24 | 50 | P.Y. 138 | 8,5 | 63 |
| S7 | 50 | P.Br. 24 | 50 | P.Y. 138 | 0 | 100 |
| 8 | 90 | P.Br. 24 | 10 | P.Y. 138 | 4,9 | 75 |
| S8 | 90 | P.Br. 24 | 10 | P.Y. 138 | 0 | 100 |
| 9 | 99 | P.Br. 24 | 1 | P.Y. 138 | 3,7 | 82 |
| S9 | 99 | P.Br. 24 | 1 | P.Y. 138 | 0 | 100 |
| 10 | 50 | P.Br. 24 | 50 | P.Y. 139 | 3,9 | 83 |
| S10 | 50 | P.Br. 24 | 50 | P.Y. 139 | 0 | 100 |
| 11 | 90 | P.Br. 24 | 10 | P.Y. 139 | 2,7 | 86 |
| S11 | 90 | P.Br. 24 | 10 | P.Y. 139 | 0 | 100 |
| 12 | 99 | P.Br. 24 | 1 | P.Y. 139 | 1,1 | 93 |
| S12 | 99 | P.Br. 24 | 1 | P.Y. 139 | 0 | 100 |
| 13 | 50 | P.Y. 53 | 50 | P.Y. 138 | 5,3 | 75 |
| S13 | 50 | P.Y. 53 | 50 | P.Y. 138 | 0 | 100 |
| 14 | 90 | P.Y. 53 | 10 | P.Y. 138 | 4,3 | 75 |
| S14 | 90 | P.Y. 53 | 10 | P.Y. 138 | 0 | 100 |
| 15 | 99 | P.Y. 53 | 1 | P.Y. 138 | 1,1 | 93 |
| S15 | 99 | P.Y. 53 | 1 | P.Y. 138 | 0 | 100 |
| 16 | 50 | P.Y. 53 | 50 | P.Y. 139 | 5,3 | 75 |
| S16 | 50 | P.Y. 53 | 50 | P.Y. 139 | 0 | 100 |
| 17 | 90 | P.Y. 53 | 10 | P.Y. 139 | 4,3 | 75 |
| S17 | 90 | P.Y. 53 | 10 | P.Y. 139 | 0 | 100 |
| 18 | 99 | P.Y. 53 | 1 | P.Y. 139 | 2,3 | 81 |
| S18 | 99 | P.Y. 53 | 1 | P.Y. 139 | 0 | 100 |

## Patentansprüche

1. Pigmentzubereitungen in Granulatform mit einer mittleren Granulatteilchengröße von 5 bis 3000 µm, enthaltend als wesentliche Bestandteile
50 bis 99,5 Gew.-% mindestens eines anorganischen Pigments und
0,5 bis 50 Gew.-% mindestens eines organischen Pigments.

2. Pigmentzubereitungen nach Anspruch 1, die als anorganisches Pigment ein Bismutvanadatpigment, ein Bleichromatpigment, ein Cersulfidpigment, ein Rutilpigment oder ein Spinellpigment oder ein Gemisch dieser Pigmente enthalten.

3. Pigmentzubereitungen nach Anspruch 1 oder 2, die als organisches Pigment ein Anthrachinonpigment, ein Anthrapyrimidinpigment, ein Azopigment, ein Azomethinpigment, ein Chinacridonpigment, ein Chinophthalonpigment, ein Diketopyrrolopyrrolpigment, ein Indanthronpigment, ein Isoindolinpigment, ein Isoindolinonpigment, ein Metallkomplexpigment, ein Perinonpigment, ein Perylenpigment, ein Phthalocyaninpigment, ein Pyranthronpigment, ein Pyrazolochinazolonpigment oder ein Thioindigopigment oder ein Gemisch dieser Pigmente enthalten.

4. Pigmentzubereitungen nach den Ansprüchen 1 bis 3, die Gemische mehrerer Gelbpigmente oder Gemische von Gelbpigmenten mit Orangepigmenten, Rotpigmenten, Braunpigmenten und/oder Blaupigmenten enthalten.

5. Pigmentzubereitungen nach den Ansprüchen 1 bis 4, die als anorganisches Pigment ein Bismutvanadatpigment und/oder ein Rutilpigment enthalten.

6. Pigmentzubereitungen nach den Ansprüchen 1 bis 5, die als organisches Pigment ein Chinophthalonpigment und/oder ein Isoindolinpigment enthalten.

7. Verfahren zur Herstellung von Pigmentzubereitungen gemäß den Ansprüchen 1 bis 6, **dadurch gekennzeichnet, daß** man die bei der Pigmentsynthese anfallenden Rohpigmente gemeinsam naßvermahlt und die bei der Mahlung erhaltene Pigmentsuspension anschließend unter Durchmischung trocknet.

8. Verfahren nach Anspruch 7, **dadurch gekennzeichnet, daß** man die Naßmahlung in Gegenwart von Wasser, protischen organischen Lösungsmitteln oder aprotischen organischen Lösungsmitteln oder Gemischen dieser Lösungsmittel durchführt.

9. Verfahren nach Anspruch 7 oder 8, **dadurch gekennzeichnet, daß** man die Trocknung in einer Sprühtrocknungsanlage durchführt.

10. Verwendung von Pigmentzubereitungen gemäß den Ansprüchen 1 bis 6 zur Einfärbung von polymeren Materialien.

## Claims

1. Pigment preparations in granule form having a median granule size within the range from 5 to 3000 µm and comprising as essential constituents
from 50 to 99.5% by weight of at least one inorganic pigment and
from 0.5 to 50% by weight of at least one organic pigment.

2. Pigment preparations as claimed in claim 1, wherein an inorganic pigment present is a bismuth vanadate pigment, a lead chromate pigment, a cerium sulfide pigment, a rutile pigment or a spinel pigment or a mixture thereof.

3. Pigment preparations as claimed in claim 1 or 2, wherein an organic pigment present is an anthraquinone pigment, an anthrapyrimidine pigment, an azo pigment, an azomethine pigment, a quinacridone pigment, a quinophthalone pigment, a diketopyrrolopyrrole pigment, an indanthrone pigment, an isoindoline pigment, an isoindolinone pigment, a metal complex pigment, a perinone pigment, a perylene pigment, a phthalocyanine pigment, a pyranthrone pigment, a pyrazoloquinazolone pigment or a thioindigo pigment or a mixture thereof.

4. Pigment preparations as claimed in any of claims 1 to 3, comprising mixtures of multiple yellow pigments or mixtures of yellow pigments with orange pigments, red pigments, brown pigments and/or blue pigments.

5. Pigment preparations as claimed in any of claims 1 to 4, wherein an inorganic pigment present is a bismuth vanadate pigment and/or a rutile pigment.

6. Pigment preparations as claimed in any of claims 1 to 5, wherein an organic pigment present is a quinophthalone pigment and/or an isoindoline pigment.

7. A process for producing pigment preparations as claimed in any of claims 1 to 6, which comprises conjointly wet-milling the as-synthesized crude pigments and subsequently drying the pigment suspension millbase with agitation.

8. A process as claimed in claim 7, wherein the wet milling is carried out in the presence of water, protic organic solvents or aprotic organic solvents or mixtures thereof.

9. A process as claimed in claim 7 or 8, wherein the drying is carried out in a spray drying plant.

10. The method of using pigment preparations as claimed in any of claims 1 to 6 for coloring polymeric materials.

## Revendications

1. Préparations pigmentaires sous forme de granulés ayant une granulométrie moyenne de 5 à 3000 µm, qui contiennent en tant que constituants principaux
de 50 à 99,5 % en poids d'au moins un pigment inorganique, et
de 0,5 à 50 % en poids d'au moins un pigment organique.

2. Préparations pigmentaires selon la revendication 1, qui contiennent en tant que pigments inorganiques un pigment de vanadate de bismuth, un pigment de chromate de plomb, un pigment de sulfure de cérium, un pigment de rutile ou un pigment de spinelle ou un mélange de ces pigments.

3. Préparations pigmentaires selon la revendication 1 ou 2, qui contiennent en tant que pigments organiques un pigment d'anthraquinone, un pigment d'anthrapyrimidine, un pigment azoïque, un pigment d'azométhine, un pigment de quinacridone, un pigment de quinophtalone, un pigment de dicétopyrrolopyrrole, un pigment d'indanthrone, un pigment d'isoindoline, un pigment d'isoindolinone, un pigment d'un complexe métallifère, un pigment de périnone, un pigment de pérylène, un pigment de phtalocyanine, un pigment de pyranthrone, un pigment de pyrazoloquinazolone ou un pigment de thioindigo, ou un mélange de ces pigments.

4. Préparations pigmentaires selon les revendications 1 à 3, qui contiennent des mélanges de plusieurs pigments jaunes ou des mélanges de pigments jaunes et de pigments orangés, de pigments rouges, de pigments bruns et/ou de pigments bleus.

5. Préparations pigmentaires selon les revendications 1 à 4, qui en tant que pigments inorganiques contiennent un pigment de vanadate de bismuth et/ou un pigment de rutile.

6. Préparations pigmentaires selon les revendications 1 à 5, qui en tant que pigments organiques contiennent un pigment de quinophtalone et/ou un pigment d'isoindoline.

7. Procédé de fabrication de préparations pigmentaires selon les revendications 1 à 6, **caractérisé en ce qu'**on broie ensemble par voie humide les pigments bruts obtenus lors de la synthèse des pigments, puis on sèche par mélange complet la suspension pigmentaire obtenue lors du broyage.

8. Procédé selon la revendication 7, **caractérisé en ce qu'**on met en oeuvre le broyage par voie humide en présence d'eau, de solvants organiques protiques ou de solvants organiques aprotiques ou de mélange de ces solvants.

9. Procédé selon la revendication 7 ou 8, **caractérisé en ce qu'**on met en oeuvre le séchage dans une installation de séchage par atomisation.

10. Utilisation de préparations pigmentaires selon les revendications 1 à 6 pour colorer dans la masse des matériaux polymères.
